# EUROPEAN PATENT APPLICATION

(11) **EP 4 714 659 A1**
(43) Date of publication of application: **25.03.2026**
(21) Application number: 25201690.2
(22) Date of filing: 11.09.2025
(51) Int. Cl.: B41J 2/17, B41J 2/185, B41J 11/00

(54) **SYSTEMS FOR AIR FLOW MANAGEMENT IN INKJET PRINTERS**

(30) Priority: 18.09.2024 ES 202430735
(71) Applicant: Electronics for Imaging, Inc., Londonderry, NH 03053 (US)
(72) Inventor: LARA RUIZ, David, 12550 Almazora, Comunidad Valenciana (ES); BUENO ESPINAL, Eduardo, 12550 Almazora, Comunidad Valenciana (ES)
(74) Representative: Stöckeler, Ferdinand

(57) **Abstract**

A single vacuum source is used for multiple high flow rate subsystems in an inkjet printer to control the dispersal of satellite droplets during ink ejection while printing and ensuring that the substrates are sufficiently flat for the printing process. This reduces cost and layout requirements, provides a simplified control structure, and allows integration of a centralized liquid removal system and a single vacuum source. Accordingly the printing quality, robustness, and versatility of inkjet printers is improved.

## Description

### FIELD

Various of the disclosed embodiments concern systems for air flow management in inkjet printers.

### BACKGROUND

Inkjet printing is a non-contact process based on ejecting inkjet droplets from a printhead. These droplets travel through a small distance, the printhead-substrate gap, and are deposited on a receiving substrate to form the desired image. Different methods for generating the drop ejection can be found. For example, piezoelectric printheads induce the drop ejection by generating pressure waves through the deformation of a piezoelectric crystal, thermal printheads induce the drop ejection by locally vaporizing a small quantity of ink that upon expansion release liquid ink, etc.

During the drop ejection process, small secondary droplets are sometimes generated. These are typically called satellite droplets. The formation of these droplets is linked to the complex interplay between inertial and surface tension forces just after drop ejection. These droplets are very small and are ejected at low velocity, resulting in a very small probability of them falling on the desired location. As a result, wandering droplets can fall on undesired locations of the substrate or on the surface of the printhead nozzle plate. This results in a degradation of printing quality and printer robustness because additional cleaning procedures are required.

One common solution to this problem, introduced in industrial printers, involves the integration of a vacuum system in the vicinity of the printheads. This vacuum system generates a mild air flow in the gap between the printhead and the substrates that removes small satellite droplets present in this region and prevents these droplets from falling on undesired locations. Such vacuum generation is typically accomplished by using a blower or a compressed air-based vacuum system. Additionally, liquid removal elements may be present to prevent the removed fluid from getting into the vacuum generation system.

### SUMMARY

In embodiments of the invention a single vacuum source is used for multiple high flow rate subsystems in an inkjet printer to control the dispersal of satellite droplets during ink ejection while printing. This reduces cost and layout requirements, provides a simplified control structure, and integrates the vacuum source into a centralized liquid removal system. Accordingly the printing quality, robustness, and versatility of inkjet printers is improved.

### BRIEF DESCRIPTION OF THE DRAWINGS

Figure 1 is a front view of a single-pass printing machine, showing a schematic view of the vacuum table and mist removal elements according to embodiments of the invention;
Figure 2 is a side view of a single-pass printing machine, showing a schematic view of the vacuum table and mist removal elements according to embodiments of the invention;
Figure 3 is a block diagram describing the air flow path in a combined vacuum system according to embodiments of the invention;
Figure 4 shows a mist removal system suction element with control valve according to embodiments of the invention;
Figure 5 shows a vacuum control system for keeping flow rate constant in a mist removal system under a variable downstream vacuum level according to embodiments of the invention; and
Figure 6 is a block diagram of a computer system as may be used to implement certain features of some of the embodiments.

### DETAILED DESCRIPTION

In state of the art industrial printers, multiple air flow sources for different requirements may be necessary. These include air flow sources for vacuum table conveyor systems, mist removal systems, printhead cleaning systems, substrate cleaning systems, substrate cooling systems, etc. Typically, a separate air flow source is used for each of these subsystems resulting in higher energy consumption, maintenance requirements, layout/packaging requirements and initial and operation costs.

Embodiments of the invention are applicable to digital inkjet printing machines that include a vacuum conveyor system for transporting the substrates and a vacuum system for removing satellite drops induced by the printing process. These two subsystems have certain aspects in common:
- They are relatively high conductance, which means that they can produce relatively high flow with low vacuum depression levels;
- They share a similar region in the printer because the mist removal system is placed just above the substrate while the vacuum table system is placed just below the substrate; and
- Both induce a multiphase flow of dispersed ink droplets in a main air stream.

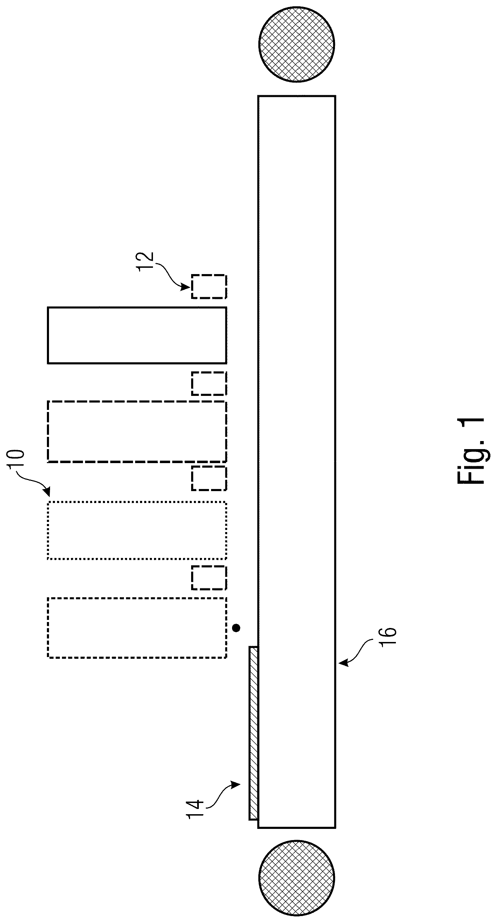

Figure 1 is a front view of a single-pass printing machine, showing a schematic view of the vacuum table and mist removal elements according to according to embodiments of the invention. In Figure 1, a series of print bars 10 have corresponding mist removal system suction elements 12 positioned proximate thereto. A substrate 14 is conveyed past the print bar and mist removal system suction elements by a vacuum table conveyor system 16. Both the suction elements and the vacuum table conveyor system may use a vacuum source during operation. The mist removal system suction elements draw satellite droplets away from the substrate when ink is ejected from the print bars and thus prevents these droplets from falling on undesired locations.

The mist removal system may alternatively use a separate blower or other such vacuum generation mechanism for preventing the satellite droplets from falling onto the surface of the substrate.

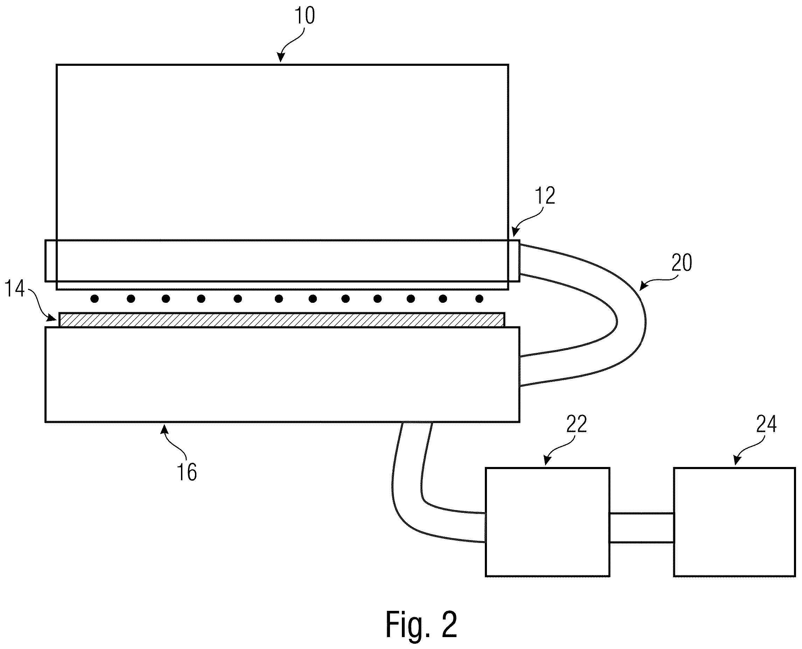

Figure 2 is a side view of a single-pass printing machine, showing a schematic view of the vacuum table and mist removal elements according to embodiments of the invention. In Figure 2, a print bar 10 is shown relative to the mist removal system suction elements 12. A connector tube 20 provides a vacuum source to the mist removal system suction elements.

As shown in Figure 2, the substrate 14 is conveyed past the print bar and mist removal system suction elements by a vacuum table conveyor system 16. In embodiments of the invention, the vacuum source 24 to which the connector tube is connected is shared with the vacuum source for the vacuum table conveyor system.

Embodiments of the invention involve the use of a single vacuum table source for both the mist removal and vacuum table conveyor systems. This leads to a reduction in cost and layout requirements, a simplified control structure, and the capacity to integrate a single centralized liquid removal system 22. In embodiments of the invention the centralized liquid removal system is composed of a combination of coalescing, separating, e.g. a cyclone, and filtrating elements to remove ink from the air stream. These are the elements that compose the liquid removal system that induces the separation of the liquid from the main air stream. The system prevents damage of the vacuum source by preventing ink from getting to it.

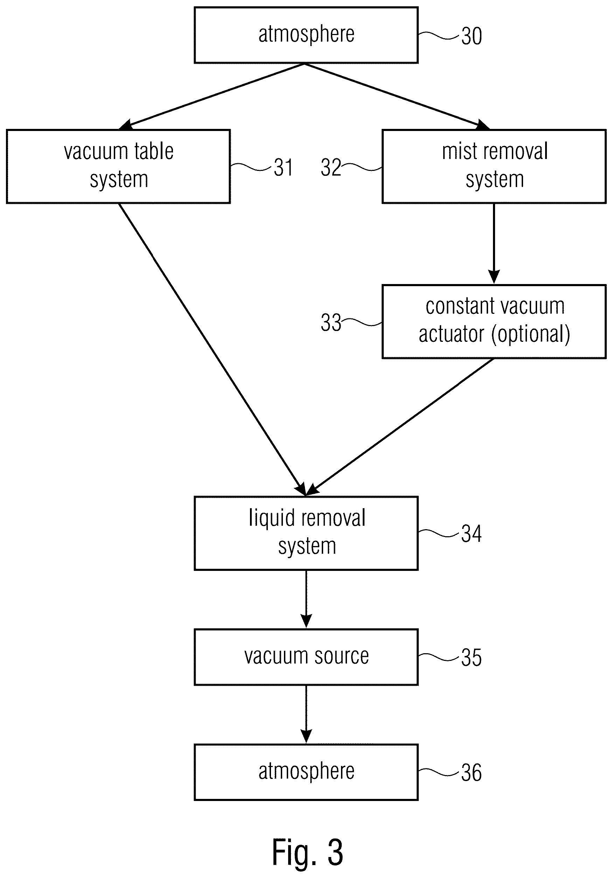

Figure 3 is a block diagram describing the air flow path in a combined vacuum system according to embodiments of the invention. In Figure 3, the air flow comes from the printer surrounding atmosphere 30. The vacuum table system 31 and the mist removal system 32 both receive a vacuum for operation from a common vacuum source 35. Examples of vacuum sources include a centrifugal fan, an axial fan, a Venturi-based vacuum ejector, etc. In embodiments of the invention the mist removal system includes a constant vacuum actuator 33 to ensure that its vacuum level is constant irrespective of the vacuum level of the vacuum source A liquid removal system 34 located before the vacuum source draws such liquid from the system as is captured by the mist removal system, as well as any moisture that may fall on the vacuum table conveyor system as the substrate is moved across its surface. The system is open to the atmosphere 36 The air flow is typically exhausted back to the surrounding atmosphere once it passes through all the elements of the pneumatic system after the vacuum source.

One important aspect for making this combined system operate properly is ensuring that the desired vacuum levels are maintained in each of the subsystems. Typically the desired vacuum level of the vacuum table conveyor system is modified according to the requirements of the substrate, with more warped or stiffer substrates requiring higher vacuum levels while the mist removal system requires stable vacuum levels to ensure that only the smallest satellite drops are removed while the main drops are not disturbed. The desired vacuum level in each of the subsystems is highly dependent on parameters such as the stiffness and warp level of the substrates, the geometry of the vacuum table conveyor and the mist removal system, the size of the drops, etc. but generally ranges between 0.5kPa and 8kPa.

In a state of the art system having a single vacuum source and no additional actuators, it is not possible to maintain stable control of the vacuum level in the mist removal system because the increase in the vacuum level of the vacuum source required to ensure appropriate flatness of the substrate through the vacuum conveyor system also leads to an increase in the vacuum level in the mist removal system. In embodiments of the invention different methods can be integrated for this purpose.

A first method involves having a high enough conductance in the mist removal system to achieve the desired flow at the minimum vacuum power and then having a vacuum relief valve or vacuum regulator at the exit of the mist removal system to admit atmospheric air when high vacuum table vacuum levels are required.

A second method involves having a closed-loop control of the vacuum at the exit of the mist removal system by modifying the conductance of a valve. In high vacuum power conditions the valve is partially closed to prevent excessive flow rate and in low vacuum power conditions it is opened to ensure that the desired flow rate is achieved.

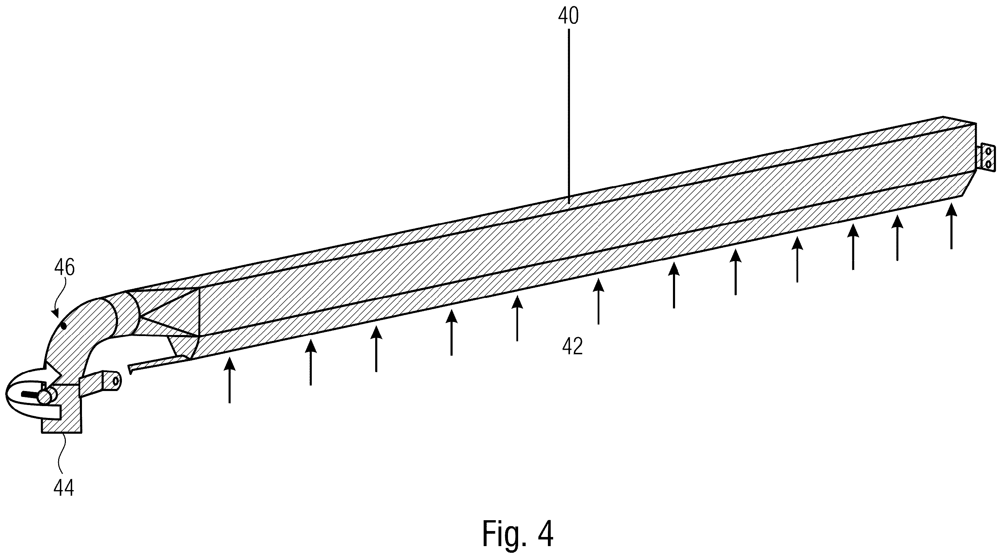

Figure 4 shows a mist removal system suction element with control valve according to embodiments of the invention. In Figure 4, a suction element 40 receives a vacuum which is used to create an upward air flow 42 that draws satellite droplets ejected from the print bars away from the substrate. The vacuum is controlled by a control valve 44, in this specific case a butterfly valve that is operated to maintain the vacuum pressure at a desired level based on vacuum pressure at the suction element as sensed by a pressure sensor at a pressure monitoring port 46.

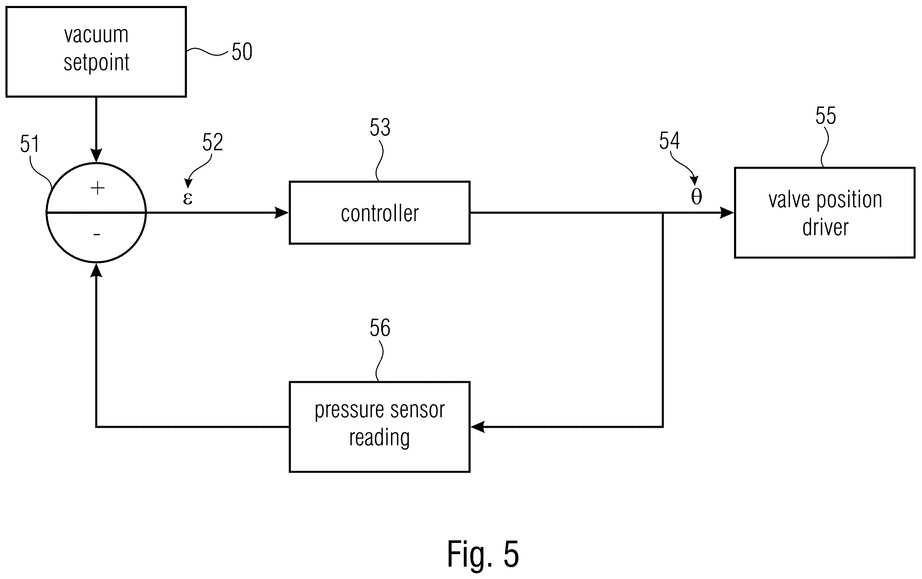

Figure 5 shows a vacuum control system for keeping flow rate constant in a mist removal system under a variable downstream vacuum level according to embodiments of the invention. In Figure 5, the system is provided with a vacuum setpoint 50, typically in the range of 0.5kPa to 8kPa. The vacuum setpoint is the desired vacuum level. The vacuum setpoint is adjusted to maintain an appropriate vacuum to operate the mist removal system by finding the optimum balance between removal of the satellite and a vacuum error 52 is determined. The vacuum error is provided as an input to a controller 53 to set a desired value angle position 54 for the control valve 44 (see Figure 4) as effected by a valve position driver 55 to bring the pressure reading to the vacuum level setpoint. The valve position driver 55 is a generic actuator. e.g. it can be electric, pneumatic, hydraulic, etc., that modifies the position of the valve according to what is prescribed by the controller. The valve angle can be measured using different instruments, e.g. an encoder, resolver, a distance sensor, Hall sensor, etc.

### Computer Implementation

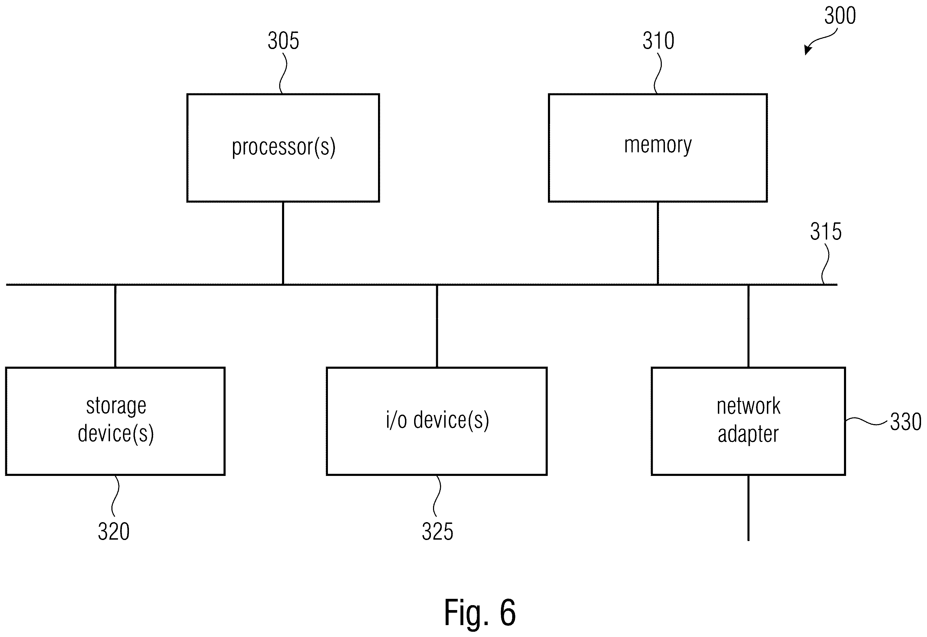

Figure 6 is a block diagram of a computer system as may be used to implement certain features of some of the embodiments. The computer system may be a server computer, a client computer, a personal computer (PC), a user device, a tablet PC, a laptop computer, a personal digital assistant (PDA), a cellular telephone, an iPhone, an iPad, a Blackberry, a processor, a telephone, a web appliance, a network router, switch or bridge, a console, a hand-held console, a (hand-held) gaming device, a music player, any portable, mobile, hand-held device, wearable device, or any machine capable of executing a set of instructions (sequential or otherwise) that specify actions to be taken by that machine.

The computing system 300 may include one or more central processing units ("processors") 305, memory 310, input/output devices 325, e.g. keyboard and pointing devices, touch devices, display devices, storage devices 320, e.g. disk drives, and network adapters 330, e.g. network interfaces, that are connected to an interconnect 315. The interconnect 315 is illustrated as an abstraction that represents any one or more separate physical buses, point to point connections, or both connected by appropriate bridges, adapters, or controllers. The interconnect 315, therefore, may include, for example, a system bus, a Peripheral Component Interconnect (PCI) bus or PCI-Express bus, a HyperTransport or industry standard architecture (ISA) bus, a small computer system interface (SCSI) bus, a universal serial bus (USB), IIC (12C) bus, or an Institute of Electrical and Electronics Engineers (IEEE) standard 1394 bus, also called Firewire.

The memory 310 and storage devices 320 arc computer-readable storage media that may store instructions that implement at least portions of the various embodiments. In addition, the data structures and message structures may be stored or transmitted via a data transmission medium, e.g. a signal on a communications link. Various communications links may be used, e.g. the Internet, a local area network, a wide area network, or a point-to-point dial-up connection. Thus, computer readable media can include computer-readable storage media, e.g. non-transitory media, and computer-readable transmission media.

The instructions stored in memory 310 can be implemented as software and/or firmware to program the processor 305 to carry out actions described above. In some embodiments, such software or firmware may be initially provided to the processing system 300 by downloading it from a remote system through the computing system 300, e.g. via network adapter 330.

The various embodiments introduced herein can be implemented by, for example, programmable circuitry, e.g. one or more microprocessors, programmed with software and/or firmware, or entirely in special purpose hardwired (non- programmable) circuitry, or in a combination of such forms. Special-purpose hardwired circuitry may be in the form of, for example, one or more ASICs, PLDs, FPGAs, etc.

The various embodiments introduced herein can be implemented by, for example, programmable circuitry, e.g. one or more microprocessors, programmed with software and/or firmware, or entirely in special purpose hardwired (non-programmable) circuitry, or in a combination of such forms. Special-purpose hardwired circuitry may be in the form of, for example, one or more ASICs, PLDs, FPGAs, etc.

In the following, additional examples of the invention will be described which can be used individually or in combination with any of the features and functionalities and details described herein.

Example 1: An apparatus, comprising:
a vacuum operated conveyor system for transporting a substrate past one or more print bars in a printer during a printing sequence; and
a vacuum operated mist removal system comprising at least one suction element for drawing satellite droplets away from the substrate when ink is ejected from the one or more print bars to prevent said satellite droplets from falling on undesired locations during the printing sequence; and
a common vacuum source connected to both said conveyor system and said mist removal system.

Example 2: The apparatus of example 1, said mist removal system further comprising:
a combination of coalescing, separating, and filtrating elements; and
an element configured to prevent ink from reaching said vacuum source.

Example 3: The apparatus of example 1 or 2, said mist removal system further comprising:
an actuator to ensure constant vacuum level.

Example 4: The apparatus of one of examples 1 to 3, further comprising:
a liquid removal system located before the vacuum source for drawing liquid captured by the mist removal system.

Example 5: The apparatus of example 4, wherein said liquid removal system is positioned before the vacuum source to capture moisture that falls on the conveyor system as the substrate is moved across a surface thereof.

Example 6. The apparatus of one of one of examples 1 to 5, wherein said mist removal system is open to the atmosphere after the vacuum source.

Example 7. The apparatus of one of examples 1 to 6, further comprising:
a vacuum control system configured to maintain a constant flow rate in the mist removal system irrespective of the vacuum level in the conveyor system.

Example 8. The apparatus of example 7, further comprising:
an element for modifying the conveyor system vacuum level according to requirements of the substrate, wherein higher vacuum levels are applied for warped or stiffer substrates, and wherein stable vacuum levels are maintained for the mist removal system to remove satellite droplets without disturbing print drops.

Example 9. The apparatus of example 7 or 8, wherein said vacuum liquid removal system has a high conductance to provide a desired flow at a minimum vacuum power at said vacuum source.

Example 10. The apparatus of example 9, further comprising:
a vacuum relief valve positioned at an exit of said mist removal system, said vacuum relief valve configured to admit atmospheric air when high vacuum levels present at said conveyor system.

Example 11. The apparatus of one of examples 7 to 10, said vacuum control system further comprising:
a valve; and
a closed-loop vacuum control positioned at an exit of said mist removal system, said closed-loop vacuum control configured to modify conductance of said valve;
wherein when a high downstream vacuum is present said valve is partially closed to prevent an excessive flow rate; and
wherein when a low downstream vacuum is present said valve is opened to achieve a desired flow rate.

Example 12. The apparatus of one of examples 1 to 11, further comprising:
said at least one suction element configured to receive a vacuum from said vacuum source to create an upward air flow that draws satellite droplets ejected from the one or more print bars away from the substrate, said suction element further comprising a pressure monitoring port;
a sensor for sensing vacuum pressure at said pressure monitoring port; and
a control valve operable to maintain a predetermined vacuum pressure at said suction element responsive to vacuum pressure at the suction element sensed by the sensor at the pressure monitoring port.

Example 13. The apparatus of one of examples 1 to 12, further comprising:
a vacuum control system wherein a vacuum setpoint is established to which a constant flow rate is maintained in said mist removal system when there is a variable downstream vacuum level, said vacuum control system comprising:
a pressure sensor;
a controller configured to receive as an input a vacuum error and to provide an angle position signal as an output;
a control valve driver configured to receive said angle position signal and configured to generate a corresponding valve drive signal; and
a control valve configured to receive said valve drive signal and configured to set a desired value angle position to maintain said vacuum at said vacuum setpoint.

Example 14. A method, comprising:
with a vacuum operated conveyor system, transporting a substrate past one or more print bars in a printer during a printing sequence; and
with a vacuum operated mist removal system comprising at least one suction element, drawing satellite droplets away from the substrate when ink is ejected from the one or more print bars to prevent said satellite droplets from falling on undesired locations during the printing sequence; and
connecting a common vacuum source to both said conveyor system and said mist removal system.

Example 15. The method of example 14, further comprising:
drawing liquid captured by the mist removal system with a liquid removal system located before the vacuum source.

Example 16. The method of example 15, further comprising:
positioning said liquid removal system before the vacuum source to capture moisture that falls on the conveyor system as the substrate is moved across a surface thereof.

Example 17. The method of example 16, further comprising:
with a vacuum control system, maintaining a constant flow rate in the mist removal irrespective of the vacuum level in the conveyor system.

Example 18. The method of example 17, further comprising:
modifying the conveyor system vacuum level according to requirements of the substrate, wherein higher vacuum levels are applied for warped or stiffer substrates, and wherein stable vacuum levels are maintained for the mist removal system to remove satellite droplets without disturbing print drops.

Example 19. The method of example 17 or 18, wherein said vacuum liquid removal system has a high conductance to provide a desired flow at a minimum vacuum power at said vacuum source.

Example 20. The method of example 19, further comprising:
with a vacuum relief valve positioned at an exit of said mist removal system, admitting atmospheric air when high vacuum levels present at said conveyor system.

Example 21. The method of one of examples 17 to 20, further comprising:
with a closed-loop vacuum control, modifying conductance of a valve positioned at an exit of said mist removal system;
partially closing said valve to prevent an excessive flow rate when a high vacuum a high downstream vacuum is present; and
opening said valve when a low downstream vacuum is present to achieve a desired flow rate.

Example 22. The method of one of examples 14 to 21, further comprising:
configuring at least one suction element receive a vacuum from said vacuum source to create an upward air flow that draws satellite droplets ejected from the one or more print bars away from the substrate, said suction element further comprising a pressure monitoring port;
with a sensor, sensing vacuum pressure at said pressure monitoring port; and
operating a control valve maintain a predetermined vacuum pressure at said suction element responsive to vacuum pressure at the suction element sensed by the sensor at the pressure monitoring port.

Example 23. The method of one of examples 14 to 22, further comprising:
establishing a vacuum setpoint with a vacuum control system to maintain a constant flow rate in said mist removal system when there is a variable downstream vacuum level;
with said vacuum control system:
   with a controller, receiving as an input a vacuum error and providing an angle position signal as an output;
   with a control valve driver, receiving said angle position signal and generating a corresponding valve drive signal; and
   with a control valve, receiving said valve drive signal and setting a desired value angle position to maintain said vacuum at said vacuum setpoint.

The language used in the specification has been principally selected for readability and instructional purposes. It may not have been selected to delineate or circumscribe the subject matter. It is therefore intended that the scope of the technology be limited not by this Detailed Description, but rather by any claims that issue on an application based hereon. Accordingly, the disclosure of various embodiments is intended to be illustrative, but not limiting, of the scope of the technology as set forth in the following claims.

## Claims

1. An apparatus, comprising:
a vacuum operated conveyor system for transporting a substrate past one or more print bars in a printer during a printing sequence; and
a vacuum operated mist removal system comprising at least one suction element for drawing satellite droplets away from the substrate when ink is ejected from the one or more print bars to prevent said satellite droplets from falling on undesired locations during the printing sequence; and
a common vacuum source connected to both said conveyor system and said mist removal system.

2. The apparatus of claim 1, said mist removal system further comprising:
a combination of coalescing, separating, and filtrating elements; and
an element configured to prevent ink from reaching said vacuum source.

3. The apparatus of claim 1 or 2, said mist removal system further comprising:
an actuator to ensure constant vacuum level.

4. The apparatus of one of claims 1 to 3, further comprising:
a liquid removal system located before the vacuum source for drawing liquid captured by the mist removal system.

5. The apparatus of claim 3 or 4, wherein said liquid removal system is positioned before the vacuum source to capture moisture that falls on the conveyor system as the substrate is moved across a surface thereof.

6. The apparatus of one of claims 1 to 5, wherein said mist removal system is open to the atmosphere after the vacuum source.

7. The apparatus of one of claims 1 to 6, further comprising:
a vacuum control system configured to maintain a constant flow rate in the mist removal system irrespective of the vacuum level in the conveyor system.

8. The apparatus of claim 7, further comprising:
an element for modifying the conveyor system vacuum level according to requirements of the substrate, wherein higher vacuum levels are applied for warped or stiffer substrates, and wherein stable vacuum levels are maintained for the mist removal system to remove satellite droplets without disturbing print drops.

9. The apparatus of claim 7 or 8, wherein said vacuum liquid removal system has a high conductance to provide a desired flow at a minimum vacuum power at said vacuum source.

10. The apparatus of claim 9, further comprising:
a vacuum relief valve positioned at an exit of said mist removal system, said vacuum relief valve configured to admit atmospheric air when high vacuum levels present at said conveyor system.

11. The apparatus of one of claims 7 to 10, said vacuum control system further comprising:
a valve; and
a closed-loop vacuum control positioned at an exit of said mist removal system, said closed-loop vacuum control configured to modify conductance of said valve;
wherein when a high downstream vacuum is present said valve is partially closed to prevent an excessive flow rate; and
wherein when a low downstream vacuum is present said valve is opened to achieve a desired flow rate.

12. The apparatus of one of claims 1 to 11, further comprising:
said at least one suction element configured to receive a vacuum from said vacuum source to create an upward air flow that draws satellite droplets ejected from the one or more print bars away from the substrate, said suction element further comprising a pressure monitoring port;
a sensor for sensing vacuum pressure at said pressure monitoring port; and
a control valve operable to maintain a predetermined vacuum pressure at said suction element responsive to vacuum pressure at the suction element sensed by the sensor at the pressure monitoring port.

13. The apparatus of one of claims 1 to 12, further comprising:
a vacuum control system wherein a vacuum setpoint is established to which a constant flow rate is maintained in said mist removal system when there is a variable downstream vacuum level, said vacuum control system comprising:
a pressure sensor;
a controller configured to receive as an input a vacuum error and to provide an angle position signal as an output;
a control valve driver configured to receive said angle position signal and configured to generate a corresponding valve drive signal; and
a control valve configured to receive said valve drive signal and configured to set a desired value angle position to maintain said vacuum at said vacuum setpoint.

14. A method, comprising:
with a vacuum operated conveyor system, transporting a substrate past one or more print bars in a printer during a printing sequence; and
with a vacuum operated mist removal system comprising at least one suction element, drawing satellite droplets away from the substrate when ink is ejected from the one or more print bars to prevent said satellite droplets from falling on undesired locations during the printing sequence; and
connecting a common vacuum source to both said conveyor system and said mist removal system.

15. The method of claim 14, further comprising:
drawing liquid captured by the mist removal system with a liquid removal system located before the vacuum source.
